# EUROPEAN PATENT APPLICATION

(11) **EP 3 779 686 A1**
(43) Date of publication of application: **17.02.2021**
(21) Application number: 19191499.3
(22) Date of filing: 13.08.2019
(51) Int. Cl.: G06F 9/455, G06F 8/20, G06N 20/00

(54) **METHOD AND DEVICE FOR PROVIDING VIRTUAL UNITS FOR SUBSTITUTING PHYSICAL COMPONENTS IN A TECHNICAL SYSTEM**

(71) Applicant: Siemens Aktiengesellschaft, 80333 München (DE)
(72) Inventor: Canizares, Alvaro, 91054 Erlangen (DE); Jehl, Gautier, 90427 Nürnberg (DE); Kaul, Shehjar, 90439 Nuremberg (DE)

(57) **Abstract**

A method for providing virtual units for substituting physical components in a first technical system is suggested. The method comprises:
during operation of a second technical system having a plurality of physical components, each of said physical components having a certain behavior for providing a certain task, collecting operation data relating to the operation of a certain physical component of said plurality of physical components,
creating a model for the certain physical component via a machine learning algorithm,
training the created model for the certain component based on training data, said training data including the collected operation data of the certain physical component, and
providing a virtual unit for said certain physical component by freezing the trained model.

Further, a computer program product and a device are suggested.

## Description

The present invention relates to a method and to a computer program product for providing virtual units for substituting physical machine and/or production line components in a first technical system. Moreover, the present invention relates to a device for providing virtual units for substituting physical machine and/or production line components in a first technical system.

Examples for such a technical system include a production machine, a production line or an automation system. Moreover, examples for physical components include I/O-devices, like sensors or actuators.

For optimizing performance and availability of such technical systems, it is required to gather more information or data during operation. For example, machine and line builders always require more sensors to generate such data, which adds complexity and costs during the design phase.

Later during the production maintenance, these new sensors add maintenance costs as well, which can in certain cases compensate the gain in productivity and become counterproductive. Finally, there is a challenge to generate more reliable information while decreasing the price and the complexity of the design.

There are different conventional solutions existing for generating more information, but none of them manages to decrease the price and the complexity at the same time. Examples for such conventional solutions include redundancies, I/O-link and virtual sensors based on simulation:

### Redundancies:

Redundancies are much used to ensure the quality of the data about a machine. The sensor is replaced by multiple sensors to measure the same value. If one sensor fails or shows false information, the value can be read from the other ones. This increases the reliability of the information, but the complexity and the price as well due to the multiplication of devices.

### I/O-link:

The I/O-link technology consists of sensors integrated in smart electrical devices directly. These sensors already give the relevant information according to the function of the smart device. For example, if it is a pump, it will provide the speed, the pressure or the electrical power required. I/O-link technology has the advantage to be a compact solution, nevertheless it makes components more complex and more expensive.

### Virtual sensors based on simulation:

This consists in creating a digital twin of a physical component using simulation software. The simulation software can use mathematical equations or physics engines to approximate the real behavior of the physical component. This technology can be very precise and competitive when models can be reused through standardization. It requires a detailed knowledge about the behavior of the part that is to be simulated which can lead to a high investment, in particular in knowledge-building, resources, time and money, in the preparation and the calibration of the models.

Each of these conventional examples shows the correlation between the amount of information available and the price and complexity at the same time. As already mentioned above, each of these solutions generates more information, but none of them manages to decrease the price and the complexity at the same time.

It is an object of the present invention to enhance the operation of a technical system.

According to a first aspect, a method for providing virtual units for substituting physical machine and/or production line components in a first technical system is suggested. The method comprises the following steps a), b), c) and d):
a) during operation of a second technical system having a plurality of physical machine and/or production line components, each of said physical components having a certain behavior for providing a certain task within the second technical system, collecting operation data relating to the operation of a certain physical component of said plurality of physical components of the second technical system,
b) creating a model for the certain physical component via a machine learning algorithm,
c) training the created model for the certain component based on training data, wherein said training data includes at least the collected operation data of the certain physical component, and
d) providing a virtual unit for said certain physical component by freezing the trained model.

The respective physical machine and/or production line component may be referred to as physical machine, production line equipment or as physical component.

According to the present method, a virtual unit is provided using a machine learning algorithm and data mining (cf. step a), collection of operation data). The provided virtual unit may be used by a plurality of technical systems, i.e. first technical systems. Thus, the first technical system may be referred to as consumer of the provided virtual unit, wherein the second technical system may be referred to as provider of the virtual unit.

In other words, the present method automatically generates virtual units or simulation models of components, like mechanical components, electrical components, pneumatic components, automation components, communication components or the like.

In the present method, a machine learning algorithm according to step b) is connected to information coming from the technical system itself, i.e. the operation data as provided in step a). For example, the information coming from the technical system itself may include values of sensors, energy consumption, automation inputs and outputs and the like. In step c), the model created by the machine learning algorithm is trained to be able to reproduce the behavior and function of the physical component which it shall substitute.

Furthermore, in step b), the certain physical component may be described as a black box using the machine learning algorithm where, in step c), the training data is entered for training the black box to get the behavior and functionality of the certain physical component. In particular, each physical component of the second technical system may be isolated and described as such a black box. In step a), for example, inputs and outputs are read during the operation of the second technical system and gathered locally.

In a further step e), the virtual unit may be redeployed in a plurality of first technical systems instead of the real physical component. In particular, the provided virtual unit may be consumed in a plurality of different technical systems.

Thus, a technical effect of the present method is that the provided virtual unit can be deployed and scale at a low cost about the system that shall be simulated, in particular in a plurality of systems.

In particular, there are advantages for machine builders as well as for the end users of the technical system:
Machine builders may generate more information about their technical decisions during the design phase by quickly generating a virtual unit as a digital twin at low cost and without requiring a specific knowledge. Using auto-generated intelligent virtual sensors and actuators as virtual units allows as well to deploy them during the production without needing to stop the technical system, as no physical connection is required. End users of technical systems, like production lines, are sometimes working with older machines they want to optimize. The possibility to deploy a virtual unit as an intelligent virtual sensor or actuator enables at low cost to generate information without changing the design of the production.

Moreover, while building a new machine or production line, a machine builder may replace a physical component he would have bought or built himself by a virtual unit, e.g. embodying an intelligent virtual sensor or actuator. As an example, such an intelligent virtual sensor may run the model directly on an edge device or on a PLC.

In the following, several embodiments for the method for operating a distribution network are described.

According to an embodiment, the method includes a further step e). In step e), the provided virtual unit is redeployed to the first technical system for substituting a corresponding physical component in the first technical system.

As mentioned above, the package may be redeployed or installed in a plurality of first technical systems. For example, the plurality of first technical systems may include different technical systems.

According to a further embodiment, the certain physical component includes one physical device of the second technical system or a subsystem including a plurality of interacting physical devices of the second technical system.

According to a further embodiment, each of the first technical system and the second technical system is a production machine, a production line or an automation system.

According to a further embodiment, each of the physical machine and/or production line component of the first technical system and the second technical system is an I/O device, in particular a sensor or an actuator, a machine part, a subset of a machine, a machine or a field device.

According to a further embodiment, the step b) of collecting operation data relating to the operation of the certain physical component includes, in particular corresponds to, reading input data and output data of the certain physical component during the operation of the second technical system.

According to a further embodiment, the step b) of collecting operation data relating to the operation of the certain physical component consists of reading input data and output data of the certain physical component during the operation of the second technical system.

In particular, said step of collecting operation data may be referred to as data mining. Moreover, said operation data may be also referred to as operational data.

According to a further embodiment, the read input data and the read output data of the certain physical component are gathered in the second technical system locally.

According to a further embodiment, the training data includes the collected operation data and simulation data relating to the second technical system.

According to a further embodiment, the step c) is executed in a local cluster of the second technical system, in a data center allocated to the second technical system or in a cloud.

According to a further embodiment, the step d) includes saving the frozen trained model in a package and providing the package as the virtual unit. Then, the package may be redeployed to the first technical system for substituting a corresponding physical component in the first technical system.

According to a further embodiment, the step a) includes testing degraded modes of the certain physical component for providing test data adapted to improve a picture of the behavior of the certain physical component in the second technical system.

According to a further embodiment, the training data includes the collected operation data and the provided test data.

According to a further embodiment, the training data includes the collected operation data, the provided test data and simulation data.

According to a second aspect, a computer program product is suggested, wherein the computer program product comprises a program code for executing the method of the first aspect or of one of the embodiments of the first aspect when the program code is run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a device for providing virtual units for substituting physical machine and/or production line components in a first technical system is suggested. The device comprises:
a collecting entity which is configured to collect, during operation of a second technical system having a plurality of physical machine and/or production line components, each of said physical components having a certain behavior for providing a certain task within the second technical system, operation data relating to the operation of a certain physical component of said plurality of physical components of the second technical system,
a creating entity which is configured to create a model for the certain physical component via a machine learning algorithm,
a training entity which is configured to train the created model for the certain component based on training data, wherein said training data includes at least the collected operation data of the certain physical component, and
a providing entity which is configured to provide a virtual unit for said certain physical component by freezing the trained model.

The device may be referred to as computerized device. In particular, the device may be or may include a computer-aided or computer-related system or a computer system.

The respective entity, e.g. the creating entity, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

The embodiments and features according to the first aspect are also embodiments of the third aspect.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:
- Fig. 1: shows a schematic diagram of an example of a conventional arrangement including a first technical system and a second technical system,
- Fig. 2: shows a sequence of method steps of an embodiment of a method for providing a virtual unit for substituting a physical component in a first technical system,
- Fig. 3: shows a schematic diagram of an example of an arrangement including a first technical system as a consumer of a provided virtual unit and a second technical system providing said virtual unit, and
- Fig. 4: shows a schematic diagram of an embodiment of a computerized device for providing a virtual unit for substituting a physical component in a first technical system.

In the Figures, like reference numerals designate like or functionally equivalent elements, unless otherwise indicated.

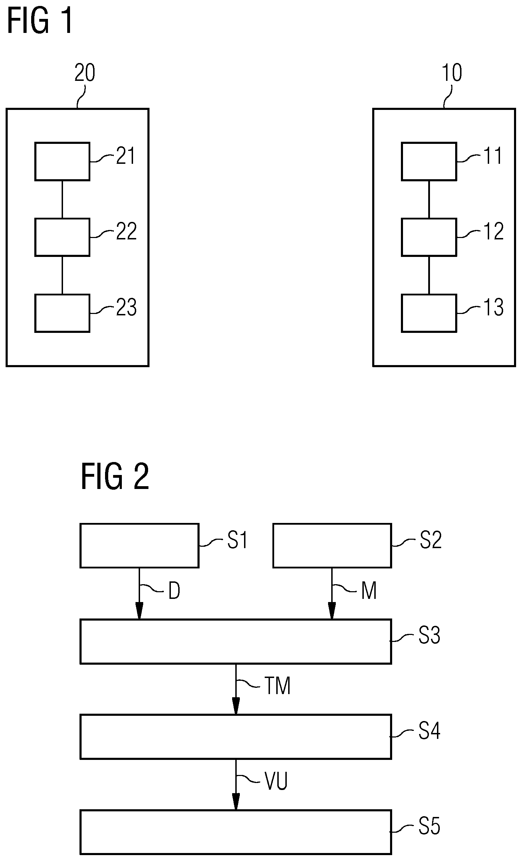

In Fig. 1, a schematic diagram of an example of a conventional arrangement including a first technical system 10 and a second technical system 20 is shown.

Each of the first technical system 10 and the second technical system 20 is a production machine, a production line or an automation system, for example. In Fig. 1, the first technical system has three physical components 11 - 23. Moreover, the second technical system 20 has three physical components 21 - 23. It may be assumed that the physical component 21 of the second technical system corresponds to the physical component 11 of the first technical system. In an analogous way, the physical component 22 may correspond to the physical component 12, and the physical component 23 may correspond to the physical component 13. In particular, "corresponding" means that the respective physical components have a similar or equal behavior and provide a similar or equal task within the respective technical system 10, 20. For example, the respective physical component 11 - 13, 21 - 23 may be an IO-device, e.g. a sensor or an actuator, a machine part, a subset of a machine, a machine or a field device.

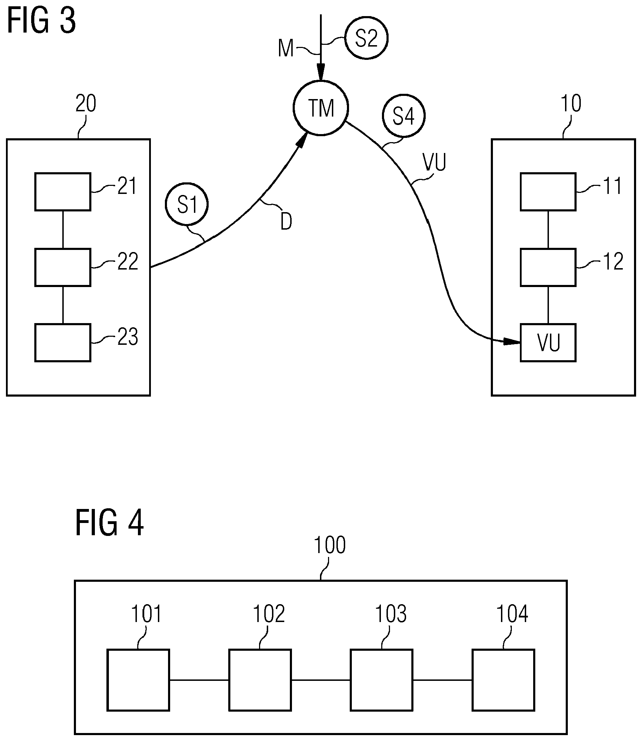

In the following, with reference to Figs. 2 to 4, it is shown how one of the physical components of the first technical system 10, namely the physical component 13 is substituted by a virtual unit VU (see Fig. 3) having a corresponding behavior and providing a corresponding function like the physical component 13 in Fig. 1.

In this regard, Fig. 2 shows a sequence of method steps of an embodiment of a method for providing a virtual unit VU for substituting the physical component 13 in the first technical system 10. Fig. 3 shows an arrangement including the first technical system 10 as a consumer of the provided virtual unit VU and including the second technical system 20 providing said virtual unit VU.

Of course, there may be a plurality of first technical systems 10 consuming the provided virtual unit VU. In other words, there is a plurality of consumers for using the single virtual unit VU, in particular in different applications.

Reference will now be made to Fig. 2 and Fig. 3.

The method of Fig. 2 has the method steps S1 - S5. It may be noted that the method steps S1 - S5 are also shown in Fig. 3. In Fig. 3, the reference signs S1, S2, S3, S4 and S5 indicating a method step of Fig. 2 are comprised with a circle. Further, in Fig. 3, reference signs showing data or a data structure are indicated by an alphabetic character, namely D for training data, M for model, TM for trained model and VU for virtual unit. For completeness, in Fig. 3, reference signs indicating a physical component are formed by two numbers, i.e. 10, 11, 12, 20, 21, 22 and 23.

### Coming back to the method steps S1 - S5:

In method step S1, during operation of the second technical system 20 having said physical components 21 - 23, operation data relating to the operation of a certain physical component 23, namely that corresponding to the physical component 13 of the first technical system (see Fig. 1), are collected.

The certain physical component 23 may include one physical device of the second technical system 20 or a sub-system including a plurality of interacting physical devices of the second technical system 20.

Particularly, collecting operation data of step S1 includes reading input data and output data of the certain physical component 23 during the operation of the second technical system 20. The read input data and the read output data of the certain physical component 23 are particularly gathered in the second technical system 20 locally.

In method step S2, a model M for the certain physical component 23 is created via a machine learning algorithm.

In method step S3, the created model M for the certain physical component 23 is trained based on training data D. The training data D includes at least the collected operation data of the certain physical component 23. In particular, the training data D additionally includes simulation data relating to the second technical system 20.

In method step S4, a virtual unit VU for said certain physical component 23 is provided by freezing the trained model TM. In particular, the frozen trained model TM may be saved in a package, and the package may be provided as the virtual unit VU. For example, that the certain physical component 23 is a sensor, the virtual unit VU may be also called virtual sensor or intelligent virtual sensor.

In method step S5, the provided virtual unit VU is redeployed to the first technical system 10 for substituting a corresponding physical component 13 in the first technical system 10. If one compares Fig. 3 with Fig. 1, he may recognize that Fig. 1 has the physical component 13, wherein in Fig. 3 the first technical system 10 has said virtual unit VU instead of the physical component 13.

It may be added that method step S1 may further include testing degraded modes of the certain physical component 23 for providing test data adapted to improve a picture of the behavior of the certain physical component 23 in the second technical system 20. Said provided test data may be also used as part of the training data D.

Fig. 4 shows a schematic diagram of an embodiment of a computerized device 100 for providing a virtual unit VU for substituting a physical component 13 in a first technical system 10 (see comparison of Figs. 1 and 3).

The computerized device 100 of Fig. 4 includes a collection entity 101, a creating entity 102, a training entity 103 and a providing entity 104.

The collecting entity 101 is configured to collect, during operation of a second technical system 20 having a plurality of physical components 21 - 23, operation data relating to the operation of a certain physical component 23 of the plurality of physical components 21 - 23 of the second technical system 20.

Moreover, the creating entity 102 is configured to create a model M for the certain physical component 23 via a machine learning algorithm.

The training entity 103 is configured to train the created model M for the certain physical component 23 based on training data D. The training data D includes at least the collected operation data of the certain physical component 23.

Furthermore, the providing entity 104 is configured to provide a virtual unit VU for said certain physical component 23 by freezing the trained model TM.

Moreover, the computerized device 100 of Fig. 4 may comprise a redeployment unit (not shown) which is configured to redeploy the provided virtual unit VU to the first technical system 10 for substituting a corresponding physical component 13 in the first technical system 10. Such a substitution is shown by comparing Fig. 3 (having the virtual unit VU in the first technical system 10) with Fig. 1 (having the physical component 13 in the first technical system 10).

Although the present invention has been described in accordance with preferred embodiments, it is obvious for the person skilled in the art that modifications are possible in all embodiments.

## Claims

1. A method for providing virtual units (VU) for substituting physical machine and/or production line components (13) in a first technical system (10), the method comprising:
a) during operation of a second technical system (20) having a plurality of physical machine and/or production line components (21-23), each of said physical components (21-23) having a certain behavior for providing a certain task within the second technical system (20), collecting (S1) operation data relating to the operation of a certain physical component (23) of said plurality of physical components (21-23) of the second technical system (20),
b) creating (S2) a model (M) for the certain physical component (23) via a machine learning algorithm,
c) training (S3) the created model (M) for the certain physical component (23) based on training data (D), wherein said training data (D) includes at least the collected operation data of the certain physical component (23), and
d) providing (S4) a virtual unit (VU) for said certain physical component (23) by freezing the trained model (TM).

2. The method of claim 1,
**characterized in**
**that**, in a step e) (S5), the provided virtual (VU) unit is redeployed to the first technical system (10) for substituting a corresponding physical component (13) in the first technical system (10).

3. The method of claim 1 or 2,
**characterized in**
**that** the certain physical component (23) includes one physical device of the second technical system (20) or a subsystem including a plurality of interacting physical devices of the second technical system (20).

4. The method of any of claims 1 to 3,
**characterized in**
**that** each of the first technical system (10) and the second technical system (20) is a production machine, a production line or an automation system.

5. The method of any of claims 1 to 4,
**characterized in**
**that** each of the physical machine and/or production line component (11, 12, 21-23) of the first technical system (10) and the second technical system (20) is an I/O device, in particular a sensor or an actuator, a machine part, a subset of a machine, a machine or a field device.

6. The method of any of claims 1 to 5,
**characterized in**
**that** the step a) (S1) of collecting operation data relating to the operation of the certain physical component (23) includes reading input data and output data of the certain physical component (23) during the operation of the second technical system (20).

7. The method of claim 6,
**characterized in**
**that** the read input data and the read output data of the certain physical component (23) are gathered in the second technical system (20) locally.

8. The method of any of claims 1 to 7,
**characterized in**
**that** the training data (D) includes the collected operation data and simulation data relating to the second technical system (20).

9. The method of any of claims 1 to 8,
**characterized in**
**that** the step c) (S3) is executed in a local cluster of the second technical system (20), in a data center allocated to the second technical system (20) or in a cloud.

10. The method of any of claims 1 to 9,
**characterized in**
**that** the step d) (S4) includes saving the frozen trained model (TM)in a package and providing the package as the virtual unit (VU).

11. The method of any of claims 1 to 10,
**characterized in**
**that** the step a) (S1) includes testing degraded modes of the certain physical component (23) for providing test data adapted to improve a picture of the behavior of the certain physical component in the second technical system (20).

12. The method of claim 11,
**characterized in**
**that** the training data (D) includes the collected operation data and the provided test data.

13. A computer program product comprising a program code for executing the method of any of claims 1 to 12 when run on at least one computer.

14. A computerized device (100) for providing virtual units (VU) for substituting physical machine and/or production line components (13) in a first technical system (10), the computerized device (100) comprising:
a collecting entity (101) which is configured to collect, during operation of a second technical system (20) having a plurality of physical machine and/or production line components (21-23), each of said physical components (21-23) having a certain behavior for providing a certain task within the second technical system (20), operation data relating to the operation of a certain physical component (23) of said plurality of physical components (23) of the second technical system (20),
a creating entity (102) which is configured to create a model (M) for the certain physical component (23) via a machine learning algorithm,
a training entity (103) which is configured to train the created model (M) for the certain physical component (23) based on training data (D), wherein said training data (D) includes at least the collected operation data of the certain physical component (23), and
a providing entity (104) which is configured to provide a virtual unit (VU) for said certain physical component (23) by freezing the trained model (TM).
